# FASCICULE DE BREVET EUROPEEN

(11) **EP 0 572 328 B1**
(45) Date de publication et mention de la délivrance du brevet: **12.03.1997**
(21) Numéro de dépôt: 93401990.2
(22) Date de dépôt: 22.01.1991
(51) Int. Cl.: G01F 11/02, B65B 3/32

(54) **Procédé de dosage d'un produit pâteux et/ou liquide**
Dosierverfahren für ein pastöses oder flüssiges Produkt
Dosing method for a pasty or liquid product

(30) Priorité: 23.01.1990 FR 9000758
(43) Date de publication de la demande: 01.12.1993
(62) Demande divisionnaire de: 91400133.4
(73) Titulaire: JAGENBERG Aktiengesellschaft, D-40476 Düsseldorf (DE)
(72) Inventeur: Torterotot, Roland, F-78730 Longvilliers (FR)
(74) Mandataire: Hasenrader, Hubert

(56) Documents cités:
- EP-A- 0 269 507
- DE-A- 2 835 460
- FR-A- 2 601 327

## Description

La présente invention se rapporte à un procédé de dosage d'un produit pâteux et/ou liquide contenu sous pression dans au moins un premier réservoir de stockage, utilisant un doseur-distributeur.

Un doseur-distributeur utilisé par la présente invention comporte au moins un bloc-doseur dans l'enceinte duquel sont prévues, d'une part, une chambre supérieure d'alimentation raccordée par une conduite d'alimentation audit premier réservoir du produit sous pression, et, d'autre part, une chambre inférieure de dosage séparée de ladite chambre d'alimentation par un piston-doseur qui est fixé à l'extrémité inférieure d'un étrier de support solidaire, à son autre extrémité, de l'extrémité inférieure d'un premier tube de commande pénétrant de façon étanche dans ladite première enceinte. Ce piston-doseur coulisse de façon étanche dans la première enceinte et est muni d'un passage central obturable par une soupape d'admission dont l'organe d'obturation, tel qu'un clapet, est porté par l'extrémité libre d'un deuxième tube ou tige de commande dépassant de façon étanche de l'extrémité inférieure du premier tube de commande et associé à des moyens de commande distincts du dispositif de commande du premier tube de commande. Ce deuxième tube est sollicité par un ressort de rappel en direction de la fermeture de la soupape d'admission et est guidé par rapport audit piston-doseur. Le doseur-distributeur comporte également au moins un bloc distributeur comprenant une chambre de distribution dont l'entrée est raccordée à la sortie de la chambre de dosage et dont la sortie est raccordée à au moins une tubulure d'éjection, ainsi qu'une soupape d'éjection dont l'organe d'obturation, tel qu'un clapet ou membrane, coopère avec l'extrémité amont de chaque tubulure d'éjection, extrémité constituant le siège de ladite soupape d'éjection et est associé à une unité de commande.

Un tel doseur-distributeur est décrit dans le brevet français n°2.646.833, qui est basé sur la demande 89 06 316 du 12 mai 1989, publiée le 16.11.90 (correspondant à EP-A-0 397 578, publié le 14.11.90).

Dans ce type de doseur-distributeur, on règle généralement la quantité ou dose de produit refoulée par le piston-doseur vers le bloc distributeur correspondant en réglant la longueur de la course de refoulement dudit piston-doseur dont le tube de commande est alors repoussé vers le bas plus ou moins tôt par une barre d'actionnement transversale agissant également sur les tubes de commande des autres blocs doseurs juxtaposés. Le réglage mécanique du volume de produit à doser est difficile à réaliser d'un bloc doseur à l'autre dans un ensemble de doseurs-distributeurs associés à une rangée de récipients, d'autant plus que ce réglage manuel doit prendre en compte toute la section du piston-doseur lors de l'ajustement de la longueur de course dudit piston-doseur.

La présente invention a pour but de supprimer ou tout au moins d'atténuer ces inconvénients.

Ce but est atteint dans le cadre d'un doseur-distributeur du type initialement mentionné du fait que, pour une course maximale donnée de refoulement du piston-doseur, course maximale correspondant à un volume de refoulement légèrement supérieur à la plus grande dose unitaire de produit à refouler entre deux courses d'aspiration dudit piston-doseur, on règle la quantité d'une dose de produit refoulée par le bloc doseur vers le bloc distributeur dont la soupape d'éjection est normalement ouverte pendant la course de refoulement dudit piston-doseur, en ouvrant au moins une fois pendant un laps de temps déterminé la soupape d'admission du bloc doseur lors de la course de refoulement du piston-doseur et en fermant simultanément la soupape d'éjection du bloc distributeur associé audit bloc doseur.

Ainsi, lors d'une seule course de refoulement du piston-doseur, la plus grande dose unitaire de produit à refouler entre deux courses d'aspiration peut être refoulée en plusieurs fois, sous la forme de plusieurs doses, dont les quantités sont à chaque fois réglées par l'ouverture de la soupape d'admission et la fermeture simultanée de la soupape d'éjection du bloc-distributeur. Lorsque la soupape d'éjection est fermée entre le refoulement de deux doses consécutives, la course de refoulement du piston-doseur peut se poursuivre grâce au fait que la soupape d'admission du bloc doseur est ouverte, ce qui permet au produit non refoulé à partir de la chambre inférieure de dosage de repasser vers la chambre supérieure d'alimentation. On règle chaque dose d'une façon précise indépendamment de la section du piston-doseur en jouant sur l'ouverture et la fermeture de la soupape d'admission.

Grâce à cette conception, on peut réaliser quasi-simultanément, et avec une très grande précision, plusieurs petites doses de produit sans que les moyens à mettre en oeuvre soient d'un prix de revient prohibitif.

L'objet de la présente invention sera encore mieux compris à l'aide de la description suivante d'un exemple de réalisation d'un doseur-distributeur conforme à l'invention, description faite en référence aux dessins annexés sur lesquels:
- la figure 1 est une vue schématique d'un doseur-distributeur, et
- les figures 2a à 2c sont des vues schématiques montrant plusieurs phases du procédé de dosage selon l'invention.

Tel que représenté sur les dessins annexés, le doseur-distributeur 1 comprend un bloc doseur unique 2 dont une enceinte 3 comporte, à la partie extrême supérieure, une ouverture latérale 4 raccordée en permanence par une conduite d'alimentation 5 à un premier réservoir de stockage non représenté contenant un premier produit pâteux et/ou liquide sous pression. Le fond de l'enceinte 3 présente une ouverture de sortie 6 qui est raccordée en permanence à l'entrée d'une deuxième enceinte 7, les deux enceintes 3 et 7 étant, le cas échéant, stériles.

La première enceinte 3 fait partie du bloc doseur 2 du doseur-distributeur 1 et la deuxième enceinte 7 fait partie d'un bloc distributeur 8. Le doseur-distributeur 1 comprend au moins un bloc distributeur 8 dont l'entrée 9 est raccordée à la sortie 6 du bloc doseur 2. La première enceinte 3 présente une configuration cylindrique et comporte, de haut en bas, une chambre supérieure d'alimentation 10 reliée en permanence à la conduite 5 et à travers celle-ci au premier réservoir de stockage, et une chambre inférieure de dosage 11. L'extrémité inférieure de la chambre d'alimentation 10 se raccorde à l'extrémité supérieure de la chambre de dosage 11 par un rétreint annulaire tronconique 12 se rétrécissant de haut en bas en direction de la chambre de dosage 11. Un piston-doseur 13 est monté de façon mobile dans la chambre de dosage 11 et peut y coulisser de façon étanche entre une position inférieure, dite position maximale de refoulement, et une position haute, dite position maximale d'aspiration, dans laquelle il se trouve juste en dessous du rétreint tronconique 12 et sépare la chambre d'alimentation 10 de la chambre de dosage 11. Ce piston-doseur 13 est fixé à la partie extrême inférieure d'un premier tube de commande 14 par l'intermédiaire d'un étrier 15. Ce piston-doseur 13 comporte un passage central 16 obturable par l'organe d'obturation tel qu'un clapet 17a d'une soupape d'admission 17. Le piston-doseur 13 comporte sur son pourtour un joint annulaire d'étanchéité 18.

Le premier tube de commande 14 traverse de façon étanche la paroi supérieure 3a de l'enceinte 3 et y est guidé axialement lors de ses mouvements alternativement ascendant et descendant commandés par exemple par un vérin à double effet 19. L'extrémité supérieure du premier tube de commande 14 est donc fixée au piston du vérin 19, par exemple pneumatique dont le cylindre est installé à poste fixe. Il faut noter que le mouvement descendant du piston-doseur 13 peut aussi être commandé par une barre transversale horizontale dont les extrémités sont articulées sur deux excentriques tournant de façon synchrone, la barre transversale agissant sur l'extrémité supérieure du premier tube de commande 14 pendant le mouvement descendant de celui-ci. Un tel mécanisme d'entraînement assurant la course de refoulement du piston-doseur 13 est décrit dans le brevet français n^{o} 2 067 993 auquel on peut se rapporter pour plus de détails. L'extrémité inférieure du premier tube de commande 14 est obturée de façon étanche vis-à-vis de l'intérieur de l'enceinte 3. Lorsque l'on utilise un mécanisme d'entraînement tel que décrit dans le brevet français n^{o} 2 067 993 pour assurer le mouvement de refoulement du piston-doseur 13, le mouvement ascendant est assuré par exemple par la pression différentielle du produit agissant sur l'extrémité inférieure du premier tube de commande 14 lorsque la soupape d'aspiration 17 est ouverte. Le premier tube de commande 14 est entouré, sur son tronçon pénétrant dans l'enceinte 3, d'un premier soufflet 20 dont l'extrémité supérieure est fixée de façon étanche sur la paroi d'enceinte 3a traversée par ledit premier tube 14 et dont l'extrémité inférieure est fixée de façon étanche sur la partie extrême inférieure dudit premier tube 14. On utilise de préférence un soufflet 20 dont la structure est décrite dans le brevet français n^{o} 2 646 833 du 12 mai 1989.

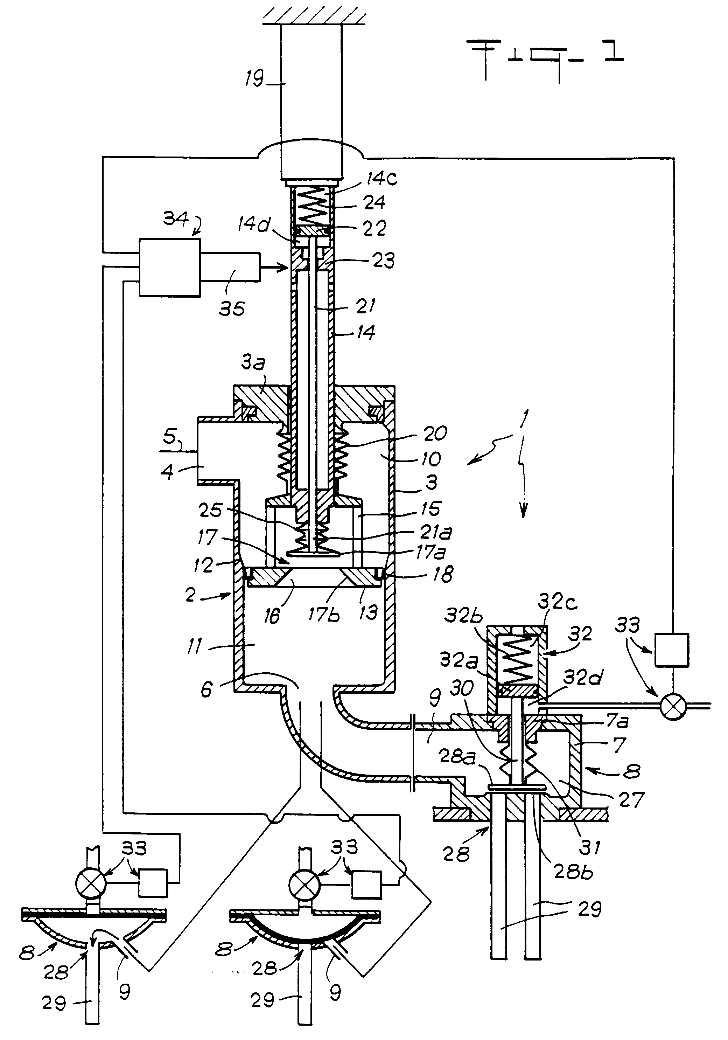

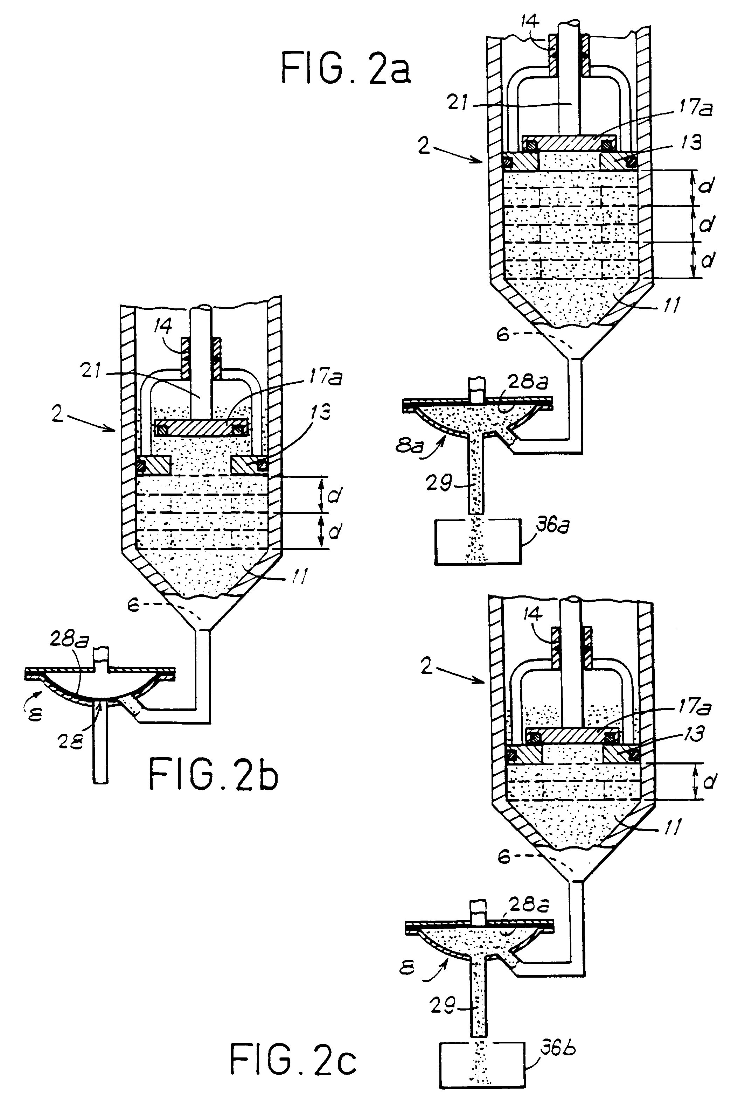

L'organe d'obturation 17a de la soupape d'admission 17 présente la forme d'un clapet et, par rapport au piston-doseur 13, est disposé du côté de la chambre d'alimentation 10, le bord supérieur du passage central 16 ménagé dans le piston-doseur 13 constituant le siège de soupape 17b de ladite soupape d'admission 13. Le passage central 16 du piston-doseur 13 présente avantageusement une forme tronconique qui s'élargit à partir de la chambre d'alimentation 10 vers la chambre de dosage 11. Le clapet d'admission 17a de la soupape d'admission 17 est disposé dans l'enceinte 3 entre l'extrémité inférieure du premier tube de commande 14 au voisinage de celui-ci, et le passage central 16 du piston-doseur 13 écarté d'une distance déterminée de l'extrémité inférieure dudit premier tube 14 tout en étant fixé sur celui-ci. En outre, ce clapet d'admission 17a est porté par l'extrémité inférieure fermée d'un deuxième tube de commande 21 guidé dans le premier tube de commande 14 et dépassant de l'extrémité inférieure de celui-ci en dessous de la bride circulaire de l'étrier 15. A son extrémité supérieure, le deuxième tube de commande 21 est associé à des moyens de commande distincts du dispositif de commande (par exemple 19) du premier tube de commande 14, ces moyens de commande comportant un piston 22 qui coulisse de façon étanche dans la partie extrême supérieure du premier tube de commande 14 et sépare l'intérieur de ladite partie extrême supérieure en une chambre supérieure 14c et une chambre inférieure 14d qui, à son extrémité inférieure, est délimitée par une cloison annulaire transversale 23 solidaire du premier tube de commande 14 et guidant de façon étanche la partie extrême supérieure du deuxième tube de commande 21. La chambre supérieure 14c est délimitée à son extrémité supérieure par le piston du vérin de commande 19, ce piston étant fixé de façon étanche à l'extrémité supérieure du premier tube de commande 14. Un ressort de rappel 24 est disposé dans la chambre supérieure 14c et en s'appuyant, d'une part, contre le piston du vérin 19 et, d'autre part, contre le piston 22 solidaire de l'extrémité supérieure du deuxième tube de commande 21, sollicite le clapet d'admission 17a en permanence contre son siège 17b, c'est-à-dire en direction de la fermeture de la soupape d'admission 17. La partie extrême inférieure 21a du deuxième tube de commande 21, partie extrême 21a dépassant de l'extrémité inférieure du premier tube de commande 14, est entourée par un deuxième soufflet 25 dont la structure est identique ou similaire à celle du soufflet 20 par exemple du type décrit en référence aux figures 1 et 2 de la demande de brevet français 89 06 316. L'extrémité supérieure du deuxième soufflet 25 est fixée de façon étanche sur l'extrémité inférieure du premier tube de commande 14 en dessous de la bride de l'étrier 15 et du premier soufflet 20, et l'extrémité inférieure dudit deuxième soufflet 25 est fixée de façon étanche soit sur l'extrémité inférieure dudit deuxième tube de commande 21, soit sur le clapet d'admission 17a solidaire dudit deuxième tube 21. De cette façon, l'extrémité inférieure du premier tube de commande 14 est obturée de façon étanche par rapport à l'intérieur de l'enceinte 3. L'espace annulaire entre la partie extrême inférieure du deuxième tube de commande 21 et le deuxième soufflet 25 est relié en permanence à l'atmosphère extérieure, par exemple à l'aide de plusieurs passages ménagés sous forme de fentes courtes ou d'orifices circulaires dans la partie extrême inférieure du deuxième tube 21 et dans le tronçon de tube restant à l'intérieur de l'espace du premier tube 14 en dessous de la cloison annulaire transversale 23, cet espace étant relié à l'atmosphère à travers un ou plusieurs orifices ménagés dans la paroi du premier tube 14 juste en dessous de ladite cloison 23. En outre, la chambre supérieure communique à travers un orifice central du piston 22 avec l'intérieur du deuxième tube de commande 21 et de ce fait avec l'atmosphère extérieure. La chambre inférieure de la partie extrême supérieure du premier tube de commande 14 peut être reliée alternativement à une source d'air comprimé ou à l'atmosphère extérieure à travers un orifice de raccordement prévu dans la paroi dudit tube 14 juste au dessus de la cloison transversale 23.

Grâce aux particularités qui viennent d'être décrites, les mouvements alternatifs du piston-doseur 13 s'effectuent sans produire des dépressions ou surpressions notables dans la chambre de dosage, le clapet d'admission 17a agissant automatiquement en tant que clapet d'échappement si pour une raison ou une autre la pression de refoulement appliquée à la quantité dosée du produit par le piston-doseur 13 dépasse une valeur prédéterminée. En outre, comme la fermeture de la soupape d'admission 17 est effectuée au moyen du deuxième tube de commande 21, le dosage du produit est fait avec une très grande précision à partir du réservoir de stockage. Par ailleurs, l'alimentation du produit sous une certaine pression assure le remplissage complet de la chambre de dosage 11 avec le produit sans apparition d'une dépression notable lors de la course ascendante du piston-doseur 13 à la soupape d'admission ouverte 17.

Le bloc distributeur 8 délimite dans la deuxième enceinte 7 une chambre de distribution 27 reliée à l'ouverture de sortie 6 de la chambre de dosage 11 et contient une soupape d'éjection 28 dont l'organe d'obturation 28a tel qu'un clapet ou une membrane assure l'obturation de l'extrémité supérieure d'au moins une tubulure d'éjection 29. Le clapet 28a est porté par l'extrémité fermée inférieure d'un troisième tube de commande 30 qui est de structure similaire à celle du premier tube de commande 14. Le tronçon du troisième tube de commande 30, tronçon pénétrant dans la chambre de distribution 27 ou autre chambre de transfert de la deuxième enceinte 7, est entouré d'un troisième soufflet 31 dont une extrémité est fixée sur la paroi d'enceinte 7a traversée de façon étanche par le troisième tube de commande 30 et dont l'autre extrémité est fixée de façon étanche sur l'organe d'obturation 28a ou sur le troisième tube 30 près de l'organe d'obturation 28a. La encore, la structure de ce soufflet 31 peut être similaire ou identique à celle précédemment annoncée. L'espace annulaire entre le troisième tube 30 et le soufflet 31 est relié en permanence à l'atmosphère extérieure de la manière précédemment décrite.

L'extrémité du troisième tube de commande 30, extrémité opposée à la soupape d'éjection 28 et située toujours à l'extérieur de la chambre de distribution 27 ou enceinte similaire, porte le piston de commande 32a d'un vérin à simple effet 32 dont le ressort de rappel 32b agit sur ledit piston 45a et ainsi sur le troisième tube de commande 30 dans le sens de la fermeture la soupape d'éjection 28 dont le siège 28b est constitué par l'extrémité supérieure de la ou des tubulures d'éjection 29. Le piston 32a sépare le volume du vérin 32 en deux chambres 32c et 32d dont celle (32c) contenant le ressort 32b est raccordée en permanence à l'atmosphère et dont l'autre (32d) est susceptible d'être raccordée alternativement soit à l'atmosphère extérieure, soit à une source d'air comprimé non représentée par l'intermédiaire d'une unité de commande 33 interposé entre, d'une part, la chambre 32d et, d'autre part, la source d'air comprimé ou l'atmosphère.

Le doseur-distributeur 1 comporte aussi un dispositif de synchronisation 34 qui coordonne les mouvements du premier tube de commande 14 et du second tube de commande 21 du piston-doseur 13, lors d'une même course de refoulement de ce dernier avec l'unité de commande 33 de la soupape d'éjection 28 d'au moins le bloc distributeur 8.

Le dispositif de commande 19 du premier tube de commande 14 associé au piston-doseur 13, les moyens de commande 22,24 de la soupape d'admission 17 et l'unité de commande 33 d'au moins le bloc distributeur 8 sont reliés à un générateur non représenté d'impulsions cycliques qui déclenche, suivant un programme prédéterminé, les courses de refoulement et d'aspiration du piston-doseur 13, l'ouverture de la soupape d'admission 17 pendant la course d'aspiration et pendant la course de refoulement entre le refoulement de deux doses successives de produit.

Avec le doseur-distributeur selon l'invention et pour une course maximale donnée de refoulement du piston-doseur 13, course maximale correspondant à un volume de refoulement légèrement supérieur à la plus grande dose unitaire de produit à refouler entre deux courses d'aspiration dudit piston-doseur, la quantité d'une dose de produit refoulée par le bloc doseur 2 vers le bloc distributeur 8 dont la soupape d'éjection 28 est normalement ouverte pendant la course de refoulement dudit piston-doseur 13, (figures 2a, 2c) est réglée en ouvrant au moins une fois, pendant un laps de temps déterminé, la soupape d'admission 17 du bloc-doseur 2 lors de la course de refoulement du piston-doseur 13 et en fermant simultanément la soupape d'éjection 28 du bloc distributeur 8 associé audit bloc-doseur 2 (figure 2b).

Dans certains cas, il peut être opportun que, pendant la même course de refoulement du piston-doseur 13, on distribue des doses de produit différentes d'une dose à l'autre. La longueur d d'une course partielle de refoulement du piston-doseur 13 peut être identique ou différente d'une course partielle à l'autre.

Selon une variante du procédé, lorsque plusieurs blocs distributeurs 8 sont associés à un bloc doseur 2, on propose que, pendant la course de refoulement du piston-doseur 13, on ouvre au moins une fois pendant un laps de temps prédéterminé, la soupape d'admission 17 de ce dernier et simultanément l'on ferme ou maintient fermées les soupapes d'éjection 28 de tous les blocs distributeurs 8.

Encore selon une autre variante du procédé, il peut être avantageux que, pendant la course de refoulement du piston-doseur 13 à soupape d'admission ouverte 17, on ouvre la soupape d'éjection 28 d'au moins le bloc distributeur 8 et l'on ferme simultanément et progressivement la soupape d'admission 17.

## Revendications

1. Procédé de dosage d'un produit pâteux et/ou liquide contenu sous pression dans au moins un premier réservoir de stockage, à l'aide d'un doseur distributeur (1) du type comportant dans l'enceinte cylindrique (3) d'au moins un bloc doseur (2), d'une part, une chambre supérieure d'alimentation (10) raccordée par une conduite d'alimentation (5) audit premier réservoir et, d'autre part, une chambre inférieure de dosage (11) séparée de ladite chambre d'alimentation (10) par un piston-doseur (13) qui est fixé à l'extrémité inférieure d'un étrier de support (15) solidaire, à son autre extrémité, de l'extrémité inférieure d'un premier tube de commande (14) pénétrant de façon étanche dans ladite première enceinte (3), qui coulisse de façon étanche dans ladite première enceinte (3), et qui est muni d'un passage central (16) obturable par une soupape d'admission (17) dont l'organe d'obturation, tel qu'un clapet (17a), est porté par l'extrémité libre (21a) d'un deuxième tube ou tige de commande (21) dépassant de façon étanche de l'extrémité inférieure du premier tube de commande (14) et associé à des moyens de commande distincts (22, 24) du dispositif de commande (19) du premier tube de commande (14), cet organe d'obturation (17a) étant sollicité par un ressort de rappel (24) en direction de la fermeture de la soupape d'admission (17) et étant guidé par rapport audit piston (13) et coopérant avec un siège de soupape (17b) entourant ledit passage central (16), au moins un bloc distributeur (8), le ou les blocs distributeurs comprenant une chambre de distribution (27) dont l'entrée est raccordée à la sortie (6) de la chambre de dosage (11) et dont la sortie est raccordée à au moins une tubulure d'éjection (29), ainsi qu'une soupape d'éjection (28) dont l'organe d'obturation, tel qu'un clapet ou membrane (28a), coopère avec l'extrémité amont de chaque tubulure d'éjection (29), extrémité constituant le siège (28b) de ladite soupape d'éjection (28) et est associé à une unité de commande (32, 33),
caractérisé en ce que, pour une course maximale donnée de refoulement du piston-doseur (13), course maximale correspondant à un volume de refoulement légèrement supérieur à la plus grande dose unitaire de produit à refouler entre deux courses d'aspiration dudit piston-doseur, on règle la quantité d'une dose de produit refoulée par le bloc doseur (2) vers le bloc distributeur (8) dont la soupape d'éjection (28) est normalement ouverte pendant la course de refoulement dudit piston-doseur (13), en ouvrant au moins une fois, pendant un laps de temps déterminé, la soupape d'admission (17) du bloc-doseur (2) lors de la course de refoulement du piston-doseur (13) et en fermant simultanément la soupape d'éjection (28) du bloc distributeur (8) dont la soupape d'éjection (28) est normalement ouverte.

2. Procédé de dosage selon la revendication 1, caractérisé en ce que pendant la course de refoulement du piston-doseur (13), la soupape d'admission (17) étant ouverte, on ouvre la soupape d'éjection (28) du bloc distributeur (8) et l'on ferme simultanément et progressivement la soupape d'admission (17).

## Patentansprüche

1. Dosierverfahren für ein pastöses und/oder flüssiges Produkt, das unter Druck mindestens in einem ersten Reservoir enthalten ist, unter Verwendung einer Dosier- und Abgabevorrichtung (1) einer Art, die in dem mit mindestens einem Dosierblock (2) versehenen zylindrischen Behältnis (3) einerseits eine obere Beschickungskammer (10) enthält, die über einen Beschickungskanal (5) mit dem oben genannten ersten Reservoir verbunden ist, und andererseits eine untere Dosierkammer (11 ) enthält, die von der oben genannten Beschickungskammer (10) durch einen Dosierkolben (13) getrennt ist, der am unteren Ende eines Stützbügels (15) befestigt ist, welcher an seinem anderen Ende fest mit dem unteren Ende einer dicht in das oben genannte erste zylindrische Behältnis (3) hineingehenden ersten Steuerröhre (14) verbunden ist und der dicht in dem oben genannten ersten zylindrischen Behältnis (3) gleitet und einen zentralen Durchgang (16) aufweist, der mittels eines Einlaßventils (17) verschließbar ist, dessen Verschlußglied - etwa eine Klappe (17a) - von dem freien Ende (21 a) einer zweiten Steuerröhre oder -stange (21) getragen wird, die dicht aus dem unteren Ende der ersten Steuerröhre (14) heraustritt und bestimmten Steuermitteln (22, 24) der Steuervorrichtung (19) der ersten Steuerröhre (14) zugeordnet ist, wobei dieses Verschlußglied (17a) von einer Rückholfeder (24) in Richtung Schließung des Einlaßventils (17) beaufschlagt wird, im Verhältnis zu dem oben genannten Kolben (13) geführt wird und mit einem Ventilsitz (17b) zusammenwirkt, der den oben genannten zentralen Durchgang (16) umgibt; die Dosier- und Abgabevorrichtung (1) enthält weiterhin mindestens einen Abgabeblock (8), wobei der beziehungsweise die Abgabeblöcke eine Abgabekammer (27) enthält beziehungsweise enthalten, deren Eingang mit dem Ausgang (6) der Dosierkammer (11) verbunden ist und deren Ausgang mit mindestens einem Ausstoßstutzen (29) verbunden ist, sowie ein Ausstoßventil (28), dessen Verschlußglied - etwa eine Klappe oder eine Membrane (28a) - mit dem oberen Ende jedes einzelnen Ausstoßstutzens (29) zusammenwirkt, wobei dieses Ende den Sitz (28b) des oben genannten Ausstoßventils bildet und einer Steuereinheit (32, 33) zugeordnet ist,
dadurch gekennzeichnet, daß bei einem gegebenen maximalen Förderhub des Dosierkolbens (13) - wobei dieser Förderhub einem Fördervolumen entspricht, das geringfügig über der größten Dosiereinheit des zu fördernden Produktes zwischen zwei Ansaughüben des oben genannten Dosierkolbens liegt - die Menge einer Produktdosis, die vom Dosierblock (2) zum Abgabeblock (8) gefördert wird, dessen Ausstoßventil (28) während des Förderhubes des oben genannten Dosierkolbens (13) normalerweise geöffnet ist, dadurch geregelt wird, daß mindestens einmal während des Ablaufs einer festgelegten Zeiteinheit das Einlaßventil (17) des Dosierblocks (2) während des Förderhubs des Dosierkolbens (13) geöffnet wird und gleichzeitig das Ausstoßventil (28) des Abgabeblocks (8) geschlossen wird, dessen Ausstoßventil (28) normalerweise geöffnet ist.

2. Dosierverfahren entsprechend dem Anspruch 1, dadurch gekennzeichnet, daß während des Förderhubs des Dosierkolbens (13) bei geöffnetem Einlaßventil (17) das Ausstoßventil (28) des Abgabeblocks (8) geöffnet wird und das Einlaßventil gleichzeitig und kontinuierlich geschlossen wird.

## Claims

1. A process for dosing a pasty and/or liquid product contained under pressure in at least one first storage reservoir, with the aid of a doser-dispenser (1) of the type comprising in the cylindrical housing (3) of at least one doser unit (2), on the one hand, an upper supply chamber (10) connected by a supply conduit (5) to said first reservoir, and, on the other hand, a lower dosing chamber (11) separated from said supply chamber (10) by a doser-piston (13) which is fixed to the lower end of a supporting stirrup element (15) fast, at its other end, with the lower end of a first control tube (14) penetrating in tight manner in said first housing (3), which slides in tight manner in said first housing (3), and which is provided with a central passage (16) adapted to be obturated by an intake valve (17) of which the obturation member, such as a flap (17a), is borne by the free end (21a) of a second control tube or rod (21) projecting in tight manner from the lower end of the first control tube (14) and associated with control means (22, 24) separate from the control device (19) of the first control tube (14), said obturation member (17a) being urged by a return spring (22) in the direction of closure of the intake valve (17) and being guided with respect to said piston (13) and cooperating with a valve seat (17b) surrounding said central passage (16), at least one dispenser unit (8), the dispenser unit(s) comprising a dispensing chamber (27) of which the inlet is connected to the outlet (6) of the dosing chamber (11) and of which the outlet is connected to at least one ejection tube (29), as well as an ejection valve (28) of which the obturation member, such as a flap or membrane (28a), cooperates with the upstream end of each ejection tube (29), which end constitutes the seat (28b) of said ejection valve (28) and is associated with a control unit (32, 33),
characterized in that, for a given maximum delivery stroke of the doser-piston (13), maximum stroke corresponding to a delivery volume slightly greater than the highest unit dose of product to be delivered between two suction strokes of said doser-piston, the quantity of a dose of product which is delivered by the doser unit (2) towards the the dispenser unit (8) of which the ejection valve (28) is normally opened during the delivery stroke of said doser-piston (13) is adjusted by opening at least once, during a determined time period, the intake valve (17) of the doser unit (2) during the delivery stroke of the doser piston (13) and by closing simultaneously the ejection valve (28) of the dispenser unit (8) of which the ejection valve (28) is normally opened.

2. The process of dosing according to claim 1, characterized in that during the delivery stroke of the doser-piston (13), the intake valve (17) being opened, the ejection valve (28) of the dispenser unit (8) is opened and the intake valve (17) is closed simultaneously and progressively.
